(19) Europäisches Patentamt
European Patent Office
Office européen des brevets

(11) EP 2 366 737 A1

(12) **EUROPEAN PATENT APPLICATION**
published in accordance with Art. 153(4) EPC

(43) Date of publication:
**21.09.2011 Bulletin 2011/38**

(21) Application number: **09827535.7**

(22) Date of filing: **16.11.2009**

(51) Int Cl.:
***C08L 63/00*** *(2006.01)* ***C08F 2/44*** *(2006.01)*
***C08F 292/00*** *(2006.01)* ***C08K 9/04*** *(2006.01)*

(86) International application number:
**PCT/JP2009/069442**

(87) International publication number:
**WO 2010/058754 (27.05.2010 Gazette 2010/21)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **18.11.2008 JP 2008294058**

(71) Applicant: **Nissan Chemical Industries, Ltd.**
**Chiyoda-ku**
**Tokyo 101-0054 (JP)**

(72) Inventors:
- **SUEMURA, Naohiko**
  **Sodegaura-shi**
  **Chiba 299-0266 (JP)**
- **SHIMADA, Megumi**
  **Sodegaura-shi**
  **Chiba 299-0266 (JP)**
- **TAKEYAMA, Toshiaki**
  **Funabashi-shi**
  **Chiba 274-8507 (JP)**

(74) Representative: **HOFFMANN EITLE**
**Patent- und Rechtsanwälte**
**Arabellastraße 4**
**81925 München (DE)**

# (54) METHOD FOR PRODUCING COMPOSITION OF POLYMERIZABLE ORGANIC COMPOUND CONTAINING SILICA PARTICLES

(57) A process for producing a composition of a polymerizable organic compound containing silica particles **characterized by** comprising: (a) a process of preparing an amine-added organic solvent-dispersed silica sol, in which an amine compound is added to an organic solvent-dispersed silica sol that contains colloidal silica particles having an average primary particle size of 5 to 100 nm and that has a pH of 2.5 to 4.0 at 20°C as measured in a diluted solution obtained by a method in which the same mass of the organic solvent-dispersed silica sol, methanol, and pure water are mixed together, so that the diluted solution obtained by the mixing method has a pH of 4.5 to 11.0 at 20°C; and (b) a process of mixing the amine-added organic solvent-dispersed silica sol obtained in the process (a) with a polymerizable organic compound.

EP 2 366 737 A1

**Description**

TECHNICAL FIELD

The present invention relates to a process for producing a stable composition of a polymerizable organic compound containing silica particles and a purification method thereof.

BACKGROUND ART

Conventionally, an organic solvent-dispersed silica sol is combined with a polymerizable organic compound to be prepared as a curable resin composition and used for improving surface hardness, wear resistance, mechanical strength, heat resistance, an anticorrosion property, and the like of coated material, molding material, and the like.
In preparation of the curable resin composition, a resin monomer, an oligomer, or the like is used as the polymerizable organic compound and, thereto, other resins, various curing agents, curing catalysts, and the like are further added. By causing a curing reaction of the curable resin composition through active energy ray irradiation or heating, a cured resin product can be obtained. A cured resin product containing colloidal silica particles may be obtained without a decrease in transparency when the colloidal silica particle has a small particle size of equal to or smaller than approximately 50 nm and has high dispersibility. Currently, there are conducted studies for applying the cured resin product containing colloidal silica particles to a sealant for optical semiconductor devices such as light-emitting diodes (LEDs), a sealant for semiconductor devices, hard coating materials, and the like.

Patent Document 1: Japanese Patent Application Publication No. JP-A-2005-225964
Patent Document 2: Published Japanese Translation of PCT Application No. JP-A-2006-507210
Patent Document 3: Japanese Patent Application Publication No. JP-A-2008-156625
Patent Document 4: Japanese Patent Application Publication No. JP-A-2008-163258
Patent Document 5: WO 06/035709

DISCLOSURE OF THE INVENTION

Problem to be Solved by the Invention

When a commercially available organic solvent-dispersed silica sol is used in order to disperse a silica sol in polymerizable organic compounds such as resin monomers and oligomers, polymerization or decomposition of the polymerizable organic compounds may occur due to the catalytic action of solid acidity of silica, which makes it impossible to obtain a stable composition of the polymerizable organic compound containing silica particles. In particular, when an organic solvent-dispersed silica sol containing colloidal silica particles, which is produced using water glass as raw material, is dispersed in a cationically polymerizable resin such as an epoxy resin, a polymerization reaction of the polymerizable organic compounds notably occurs due to the catalytic action of strong solid acidity of silica, and therefore it has been difficult to obtain a composition of a polymerizable organic compound containing silica particles with excellent stability.
It is an object of the present invention to provide a process for producing a composition of a polymerizable organic compound containing silica particles, which is excellent in long-term storage stability, accompanied with no polymerization or decomposition of the polymerizable organic compounds.

Means for Solving the Problem

The present invention is made to achieve the object described above and includes the following outlines.

(1) A process for producing a composition of a polymerizable organic compound containing silica particles is characterized by including:

(a) a process of preparing an amine-added organic solvent-dispersed silica sol, in which an amine compound is added to an organic solvent-dispersed silica sol that contains colloidal silica particles having an average primary particle size of 5 to 100 nm and that has a pH of 2.5 to 4,0 at 20°C as measured in a diluted solution obtained by a method in which the same mass of the organic solvent-dispersed silica sol, methanol, and pure water are mixed together, so that the diluted solution obtained by the mixing method has a pH of 4.5 to 11.0 at 20°C; and
(b) a process of mixing the amine-added organic solvent-dispersed silica sol obtained in the process (a) with a

polymerizable organic compound.

(2) In the process for producing a composition of a polymerizable organic compound containing silica particles according to claim 1, in the process (a), the pH at 20°C as measured in the diluted solution of the amine-added organic solvent-dispersed silica sol obtained by the mixing method is 5.0 to 8.5.
(3) The process for producing a composition of a polymerizable organic compound containing silica particles according to (1) or (2) is characterized in that the colloidal silica particles in the process (a) are rendered organophilic with organosilane compounds.
(4) In the process for producing a composition of a polymerizable organic compound containing silica particles according to any one of (1) to (3), the polymerizable organic compound is a cationically polymerizable resin.
(5) In the process for producing a composition of a polymerizable organic compound containing silica particles according to any one of (1) to (3), the polymerizable organic compound is a liquid epoxy resin.
(6) In the process for producing a composition of a polymerizable organic compound containing silica particles according to any one of (1) to (3), the polymerizable organic compound is an epoxy resin containing one or more epoxycyclohexyl groups in a molecule thereof.
(7) In the process for producing a composition of a polymerizable organic compound containing silica particles according to any one of (1) to (3), the polymerizable organic compound is an acrylic monomer and/or an acrylic oligomer.
(8) The process for producing a composition of a polymerizable organic compound containing silica particles according to any one of (1) to (3) is characterized in that a part or all of an organic solvent contained in a composition of the polymerizable organic compound containing silica particles is removed.

Effects of the Invention

According to the present invention, it is possible to efficiently produce a composition of a polymerizable organic compound containing silica particles having high dispersibility of colloidal silica particles and excellent storage stability. The present invention is particularly effective when a cationically polymerizable resin such as an epoxy resin is used as the polymerizable organic compound.

BEST MODES FOR CARRYING OUT THE INVENTION

The present invention includes the two processes below:

(a) a process of preparing an amine-added organic solvent-dispersed silica sol, in which an amine compound is added to an organic solvent-dispersed silica sol that contains colloidal silica particles having an average primary particle size of 5 to 100 nm and that has a pH of 2.5 to 4.0 at 20°C as measured in a diluted solution obtained by a method in which the same mass of the organic solvent-dispersed silica sol, methanol, and pure water are mixed together, so that the diluted solution obtained by the same method as the mixing method has a pH of 4.5 to 11.0 at 20°C; and
(b) a process of mixing the amine-added organic solvent-dispersed silica sol obtained in the process (a) with a polymerizable organic compound.

The organic solvent-dispersed silica sol used in the present invention can be obtained by organic solvent substitution of an aqueous silica sol produced by a known method using water glass as raw material. Colloidal silica particles may aggregate during the organic solvent substitution when the aqueous silica sol contains a free alkaline component, and therefore a technique is generally adopted in which organic solvent substitution is carried out on an acidic aqueous silica sol that is dealkalized by cation exchange or the like. The organic solvent-dispersed silica sol obtained by this technique is acidic and has a pH of 2.5 to 4.0 as measured in a diluted solution obtained by a method in which the same mass of the three components, that is, the organic solvent-dispersed silica sol, methanol, and pure water are mixed together.
The average primary particle size of colloidal silica particles contained in the organic solvent-dispersed silica sol used in the present invention is 5 to 100 nm. The average primary particle size of the colloidal silica particles is calculated by the conversion formula below using a specific surface area measured by the nitrogen adsorption method (the BET method).
Average primary particle size D (nm) = 2720 / specific surface area S ($m^2/g$)

The specific surface area of a colloidal silica particle contained in the organic solvent-dispersed silica sol used in the present invention is 27.2 to 550 $m^2/g$.

The particle shape of a colloidal silica particle contained in the organic solvent-dispersed silica sol may be any shape known in the technical field, and examples thereof include spherical, elongated, elliptically spherical, bur-shaped, distorted, and the like shapes.

The silica concentration in the organic solvent-dispersed silica sol used in the present invention is not particularly limited, but usually 10 to 50% by mass is preferable.

As for the organic solvent-dispersed silica sol used in the present invention, any organic solvents such as alcohols, ketones, esters, and hydrocarbons can be used as organic solvent. Organic solvent that is excellent in compatibility with the polymerizable organic compound to be used is particularly preferable.

Examples of the alcohol specifically include methanol, ethanol, 1-propanol, 2-propanol, 1-butanol, isobutanol, 2-butanol, ethylene glycol, glycerin, propylene glycol, triethylene glycol, polyethylene glycol, benzyl alcohol, 1,5-pentanediol, diacetone alcohol, and the like.

Examples of ether specifically include diethyl ether, dibutyl ether, tetrahydrofuran, dioxane, ethylene glycol monomethyl ether, ethylene glycol monopropyl ether, propylene glycol monomethyl ether, propylene glycol monoethyl ether, diethylene glycol monomethyl ether, diethylene glycol monoethyl ether, diethylene glycol monobutyl ether, and the like.

Examples of the ester specifically include ethyl formate, methyl acetate, ethyl acetate, propyl acetate, butyl acetate, ethylene glycol monoethyl ether acetate, ethylene glycol monobutyl ether acetate, and the like.

Examples of the ketone specifically include acetone, methyl ethyl ketone, 2-pentanone, 3-pentanone, methyl isobutyl ketone, 2-heptanone, cyclohexanone, and the like.

Examples of the hydrocarbon specifically include n-hexane, cyclohexane, benzene, toluene, xylene, solvent naphtha, and styrene.

Examples of halogenated hydrocarbon include dichloromethane, trichloroethylene, and the like.

In the present invention, a commercially available organic solvent-dispersed silica sol can be used. Examples of one containing colloidal silica particles that are already rendered organophilic with organosilane compounds include MEK-ST (a methyl ethyl ketone-dispersed silica sol, manufactured by Nissan Chemical Industries, Ltd.), MEK-ST-MS (a methyl ethyl ketone-dispersed silica sol, manufactured by Nissan Chemical Industries, Ltd.), MEK-ST-UP (a methyl ethyl ketone-dispersed silica sol, manufactured by Nissan Chemical Industries, Ltd.), MIBK-ST (a methyl isobutyl ketone-dispersed silica sol, manufactured by Nissan Chemical Industries, Ltd.), EAC-ST (an ethyl acetate-dispersed silica sol, manufactured by Nissan Chemical Industries, Ltd.), TOL-ST (a toluene-dispersed silica sol, manufactured by Nissan Chemical Industries, Ltd), PMA-ST (a propylene glycol monomethyl ether acetate-dispersed silica sol, manufactured by Nissan Chemical Industries, Ltd.), and the like.

Other than the above mentioned ones, MA-ST-S (a methanol-dispersed silica sol, manufactured by Nissan Chemical Industries, Ltd.), MT-ST (a methanol-dispersed silica sol, manufactured by Nissan Chemical Industries, Ltd.), MA-ST-UP (a methanol-dispersed silica sol, manufactured by Nissan Chemical Industries, Ltd.), MA-ST-MS (a methanol-dispersed silica sol, manufactured by Nissan Chemical Industries, Ltd.), IPA-ST (an isopropanol-dispersed silica sol, manufactured by Nissan Chemical Industries, Ltd.), IPA-ST-UP (an isopropanol-dispersed silica sol, manufactured by Nissan Chemical Industries, Ltd.), IPA-ST-MS (an isopropanol-dispersed silica sol, Nissan Chemical Industries, Ltd.), NPC-ST-30 (an n-propyl cellosolve-dispersed silica sol, manufactured by Nissan Chemical Industries, Ltd.), PGM-ST (an 1-methoxy-2-propanol-dispersed silica sol, manufactured by Nissan Chemical Industries, Ltd.), and the like can be used.

Examples of the amine compound used in the present invention include alkylamines such as triethylamine, isopropylamine, diisopropylamine, n-propylamine, di-n-propylamine, isobutylamine, diisobutylamine, n-butylamine, di-n-butylamine, tri-n-butylamine, tri-n-octylamine, N- ethyldiisopropylamine, cyclohexylamine, and dicyclohexylamine, aralkylamines such as benzylamine, cycloaliphatic amines such as piperidine, N-methylpiperidine, and quinuclidine, alkanolamines such as monoethanolamine, triethanolamine, N-methyldiethanolamine, N,N-dimethylethanolamine, N,N-diethylethanolamine, N,N-dibutylethanolamine, and triisopropanolamine, quaternary ammonium such as tetramethylammonium hydroxide, cyclic amines such as imidazol, imidazol derivatives,
1,8-diaza-bicyclo(5,4,0)undeca-7-ene, 1,5-diaza-bicyclo(4,3,0)nona-5-ene, 1,4-diaza-bicyclo(2,2,2) octane, and aminosilanes such as aminopropyltrimethoxysilane and aminopropyltriethoxysilane.

The polymerizable organic compound used in the present invention is an organic compound containing one

or more polymerizable groups in a molecule and is liquid at 30°C. The polymerizable organic compound used in the present invention may be any of a monomer, an oligomer, and a prepolymer. Examples thereof include an acrylic monomer, an acrylic oligomer, a liquid epoxy resin, an oxetane resin, a vinyl ether resin, and the like.

The present invention is particularly effective when a cationically polymerizable resin such as an epoxy resin, an oxetane resin, and a vinyl ether resin is used. The present invention is particularly effective for, among epoxy resins, an epoxy resin containing one or more epoxycyclohexyl groups in a molecule.

The acrylic monomer is not particularly limited, but specific examples thereof include ethylene glycol di(meth) acrylate, diethylene glycol di(meth)acrylate, triethylene glycol di(meth)acrylate, tetraethylene glycol di(meth)acrylate, nonaethylene glycol di(meth)acrylate, polyethylene glycol di(meth)acrylate, tripropylene glycol di(meth)acrylate, tetrapropylene glycol di(meth)acrylate, nonapropylene glycol di(meth)acrylate, polypropylene glycol di(meth)acrylate, 2,2-bis [4-((meth)acryloxydiethoxy)phenyl]propane, 3-phenoxy-2-propanoyl acrylate, 1,6-bis(3-acryloxy-2-hydroxypropyl)-hexyl ether, trimethylolpropane tri(meth)acrylate, glycerol tri(meth)acrylate, tris-(2-hydroxyethyl)-isocyanurate ester (meth)acrylate, pentaerythritol tri(meth)acrylate, pentaerythritol tetra(meth)acrylate, dipentaerythritol tri(meth)acrylate, dipentaerythritol penta(meth)acrylate, dipentaerythritol hexa(meth)acrylate, tripentaerythritol octa(meth)acrylate, tripentaerythritol hepta(meth)acrylate, 2-hydroxypropyl (meth)acrylate, 2-ethylhexyl (meth)acrylate, 2-norbornylmethyl methacrylate, 2-hydroxy-3-phenoxypropyl (meth)acrylate, 2-hydroxyethyl (meth)acrylate, 2,2-dimethylbutyl acrylate, 2-hydroxybutyl (meth)acrylate, n-propyl (meth)acrylate, n-butyl (meth)acrylate, i-butyl (meth)acrylate, t-butyl (meth)acrylate, n-hexyl (meth)acrylate, n-pentyl (meth)acrylate, n-octyl (meth)acrylate, 2-methoxyethyl (meth)acrylate, 2-methoxymethoxyethyl acrylate, 3-pentyl (meth)acrylate, 3-methyl-2-norbornylmethyl methacrylate, 3-methoxybutyl (meth)acrylate, 4-hydroxybutyl (meth)acrylate, 4-methyl-2-propylpentyl acrylate, 5-norbornen-2-ylmethyl methacrylate, i-propyl (meth)acrylate, n-octadecyl (meth)acrylate, n-nonyl (meth)acrylate, sec-butyl (meth)acrylate, t-pentyl (meth)acrylate, ethyl $\alpha$-hydroxymethyl acrylate, butyl $\alpha$-hydroxymethyl acrylate, methyl $\alpha$-hydroxymethyl acrylate, (meth)acrylic acid, n-stearyl acrylate, isooctyl acrylate, isononyl acrylate, isobornyl (meth)acrylate, ethyl (meth)acrylate, ethylcarbitol acrylate, ethoxyethyl (meth)acrylate, ethoxyethoxyethyl (meth)acrylate, ethoxydiethylene glycol acrylate, cyclohexyl (meth)acrylate, cyclohexylmethyl (meth)acrylate, cyclopentyl acrylate, dicyclopentenyloxyethyl acrylate, cetyl acrylate, tetrahydrofurfuryl (meth)acrylate, phenoxyethyl (meth)acrylate, (meth)acryloyloxyethyl hydrogen phthalate, benzyl (meth)acrylate, methyl (meth)acrylate, methoxyethyl (meth)acrylate, methoxyethoxyethyl (meth)acrylate, methoxypolyethylene glycol (meth) acrylate, lauryl (meth)acrylate, 1,3-butanediol di(meth)acrylate, 1,4-butanediol di(meth)acrylate, 1,6-hexanediol di(meth) acrylate, 1,9-nonanediol di(meth)acrylate, allylated cyclohexyl di(meth)acrylate, glycerin di(meth)acrylate, dicyclopentanyl di(meth)acrylate, tricyclodecane dimethanol di(meth)acrylate, trimethylolpropane di(meth)acrylate, neopentyl glycol adipate di(meth)acrylate, neopentyl glycol di(meth)acrylate, neopentyl glycol hydroxypivalate ester diacrylate, ethoxylated trimethylolpropane tri(meth)acrylate, glycerinpropoxy tri(meth)acrylate, trimethylolpropane polyethoxy tri(meth) acrylate, propionic acid-modified dipentaerythritol tri(meth)acrylate, ditrimethylolpropane tetra(meth)acrylate, propionic acid-modified dipentaerythritol tetra(meth)acrylate, propoxylated pentaerythritol tetra(meth)acrylate, propionic acid-modified dipentaerythritol penta(meth)acrylate, glycidyl methacrylate, and the like. For example, ethylene glycol di(meth) acrylate means ethylene glycol diacrylate and ethylene glycol dimethacrylate.

The acrylic oligomer is not particularly limited, but typical examples thereof include epoxy acrylate oligomers, urethane acrylate oligomers, polyester acrylate oligomers, and the like.

The epoxy resin is not particularly limited, but specific examples thereof include 1,4-butanediol diglycidyl ether, 1,2-epoxy-4-(epoxyethyl)cyclohexane, glycerol triglycidyl ether, diethylene glycol diglycidyl ether, 2,6-diglycidyl phenyl glycidyl ether, 1,1,3-tris[p-(2,3-epoxypropoxy)phenyl]propane, 1,2-cyclohexane dicarboxylic acid diglycidyl ester, 4,4'-methylene bis(N,N-diglycidyl aniline),

3,4-epoxycyclohexylmethyl-3,4-epoxycyclohexane carboxylate, trimethylol ethane triglycidyl ether, triglycidyl-p-aminophenol, tetraglycidyl methaxylene diamine, tetraglycidyldiaminodiphenylmethane, tetraglycidyl-1,3-bisaminomethylcyclohexane, bisphenol-A-diglycidyl ether, bisphenol-S-diglycidyl ether, pentaerythritol tetraglycidyl ether, resorcinol diglycidyl ether, diglycidyl phthalate ester, neopentyl glycol diglycidyl ether, polypropylene glycol diglycidyl ether, tetrabromobisphenol-A-diglycidyl ether, bisphenol hexafluoroacetone diglycidyl ether, pentaerythritol diglycidyl ether, hydrogenated bisphenol-A-diglycidyl ether, tris-(2,3-epoxypropyl)isocyanurate, 1-{2,3-di(propionyloxy)}-3,5-bis(2,3-epoxypropyl)-1,3,5-triazine-2,4,6·(1H,3H,5H)-trion e,

1,3-bis{2,3-di(propionyloxy)}-5-(2,3-epoxypropyl)-1,3,5-triazine-2,4,6-(1H,3H,5H)-trion e, monoallyl diglycidyl isocyanurate, diglycerol polydiglycidyl ether, pentaerythritol polyglycidyl ether, 1,4-bis(2,3-epoxypropoxyperfluoroisopropyl)cyclohexane, sorbitol polyglycidyl ether, trimethylolpropane polyglycidyl ether, resorcin diglycidyl ether, 1,6-hexanediol diglycidyl ether, polyethylene glycol diglycidyl ether, phenyl glycidyl ether, p-tert-butylphenyl glycidyl ether, adipic acid diglycidyl ether, o-phthalic acid diglycidyl ether, dibromophenyl glycidyl ether, 1,2,7,8-diepoxyoctane, 1,6-dimethylol perfluorohexane diglycidyl ether, 4,4'-bis(2,3-epoxypropoxyperfluoroisopropyl)diphenyl ether, 2,2-bis(4-glycidyloxyphenyl)propane,

3,4-epoxycyclohexylmethyl-3',4'-epoxycyclohexane carboxylate, 3,4-epoxycyclohexyloxirane,

2-(3,4-epoxycyclohexyl)-3',4'-epoxy-1,3-dioxane-5-spirocyclohexane, 1,2-ethylenedioxy-bis(3,4-epoxycyclohexylmethane),
4',5'-epoxy-2'-methylcyclohexylmethyl-4,5-epaxy-2-methylcyclohexane carboxylate, ethylene glycol-bis(3,4-epoxycyclohexane carboxylate),
bis-(3,4-epoxycyclohexylmethyl) adipate, and bis(2,3-epoxycyclopentyl) ether.

Among them, examples of the epoxy resin containing one or more epoxycyclohexyl groups in a molecule include 3,4-epoxycyclohexylmethyl-3',4'-epoxycyclohexane carboxylate, 3,4-epoxycyclohexyloxixane,
2-(3,4-epoxycyclohexyl)-3',4'-epoxy-1,3-diaxane-5-spirocyclohexane, 1,2-ethylenedioxy-bis(3,4-epoxycyclohexylmethane),
4',5'-epoxy-2'-methylcyclohexylmethyl-4,5-epoxy-2-methylcyclohexane carboxylate, ethylene glycol-bis(3,4-epoxycyclohexane carboxylate),
bis-(3,4-epoxycyclohexylmethyl) adipate, and bis(2,3-epoxycyclopentyl) ether.

The oxetane resin is not particularly limited, but examples thereof include 3-ethyl-3-hydroxymethyloxetane, 3-ethyl-3-(phenoxymethyl)oxetane, 3,3-diethyloxetane, and 3-ethyl-3-(2-ethylhexyloxymethyl)oxetane,
1,4-bis(((3-ethyl-3-oxetanyl)methoxy)methyl)benzene, di((3-ethyl-3-oxetanyl)methyl) ether, pentaerythritol tetrakis((3-ethyl-3-oxetanyl)methyl) ether, and the like.

The vinyl ether resin is not particularly limited, but examples thereof include vinyl-2-chloroethyl ether, vinyl n-butyl ether, 1,4-cyclohexanedixmethanol divinyl ether, vinyl glycidyl ether, bis(4-(vinyloxymethyl)cyclohexylmethyl) glutarate, tri(ethylene glycol) divinyl ether, divinyl adipate ester, diethylene glycol divinyl ether, tris(4-vinyloxy)butyl trimellilate, bis(4-(vinyloxy)butyl) terephthalate, bis(4-(vinyloxy)butyl isophthalate, ethylene glycol divinyl ether, 1,4-butanediol divinyl ether, tetramethylene glycol divinyl ether, tetraethylene glycol divinyl ether, neopentyl glycol divinyl ether, trimethylolpropane trivinyl ether, trimethylol ethane trivinyl ether, hexanediol divinyl ether, 1,4-cyclohexanediol divinyl ether, tetraethylene glycol divinyl ether, pentaerythritol divinyl ether, pentaerythritol trivinyl ether, cyclohexanedimethanol divinyl ether, and the like.

The surface of a colloidal silica particle contained in the organic solvent-dispersed silica sol used in the present invention is preferably rendered organophilic by a reaction of a surface silanol group of the colloidal silica particle with an organosilane compound to form a covalent bond. When the surface of the colloidal silica particle is not rendered organophilic, the colloidal silica particles may aggregate depending on the types of the amine compound to be subsequently added, or dispersion stability of a composition of the polymerizable organic compound containing silica particles to be obtained may be deteriorated.

Examples of the organosilane compound capable of forming a covalent bond by reacting with a surface silanol group of the colloidal silica particle include a silazane compound, a siloxane compound, or alkoxysilane, or the partially hydrolyzed product thereof, or a dimeric to pentameric oligomer of the partially hydrolyzed product thereof.

Examples of the silazane compound include hexamethyldisilazane and hexaethyldisilazane.

Examples of the siloxane compound include hexamethyldisiloxane, 1,3-dibutyltetramethyldisiloxane, 1,3-diphenyltetramethyldisiloxane, 1,3-divinyltetramethyldisiloxane, hexaethyldisiloxane, and 3-glycidoxypropylpentamethyldisiloxane.

Examples of the alkoxysilane include trimethylmethoxysilane, trimethylethoxysilane, trimethylpropoxysilane, phenyldimethylmethoxysilane, chloropropyldimethylmethoxysilane, dimethyldimethoxysilane, methyltrimethoxysilane, tetramethoxysilane, tetraethoxysilane, tetrapropoxysilane, tetrabutoxysilane, ethyltrimethoxysilane, dimethyldiethoxysilane, propyltriethoxysilane, n-butyltrimethaxysilane, n-hexyltrimethoxysilane, n-octyltriethoxysilane, n-octylmethyldiethoxysilane, n-octadecyltrimethoxysilane, phenyltrimethoxysilane, phenylmethyldimethoxysilane, phenethyltrimethoxysilane, dodecyltrimethoxysilane, n-octadecyltriethoxysilane, phenyldimethylethoxysilane, phenyltriethoxysilane, diphenyldimethoxysilane, vinyltrimethoxysilane, vinyltriethoxysilane, vinyl tris(β methoxyethoxy)silane, γ-methacryloxypropyltrimethoxysilane, γ-acryloxypropyltrimethoxysilane, γ-(methacryloxypropyl)methyldimethoxysilane, γ-methacryloxypropylmethyldiethoxysilane, γ-methacryloxypropyltriethoxysilane, β-(3,4-epoxycyclohexyl)ethyltrimethoxysilane, γ-glycidoxypropyltrimethoxysilane, γ-glycidoxypropylmethyldiethoxysilane, γ-glycidoxypropyltriethoxysilane, N-β(aminoethyl) γ-(aminopropyl)methyldimethoxysilane, N-β(aminoethyl)γ-(aminopropyl)trimethoxysilane,
N-β(aminoethyl)γ-(aminopropyl)triethoxysilane, γ-aminopropyltrimethoxysilane, γ-aminopropyltriethoxysilane, N-phenyl-γ-aminopropyltrimethoxysilane, γ-mercaptopropyltrimethoxysilane, 3-isocyanatepropyltriethoxysilane, trifluoropropyltrimethoxysilane, heptadecatrifluoropropyltrimethoxysilane, n-decyltrimethoxysilane, dimethoxydiethoxysilane, bis(triethoxysilyl)ethane, and hexaethoxydisiloxane.

The organosilane compound can be used alone or as a mixture of two or more types.

In the present invention, first in the process (a), an organic solvent-dispersed silica sol that contains colloidal silica particles having an average primary particle size of 5 to 100 nm and that has a pH of 2.5 to 4.0 at 20°C as measured in a diluted solution obtained by mixing the same mass of the organic solvent-dispersed silica sol, methanol, and pure water together, is placed in a suitable reaction vessel, and then the amine compound is added thereto while stirring at room temperature or on heating. When the organic solvent-dispersed silica sol is heated while adding the amine compound, the temperature is preferably lower than the boiling point of the organic solvent-dispersed silica sol.

The addition amount of the amine is adjusted such that a pH is 4.5 to 11.0, preferably 5.0 to 8.5, at 20°C as measured in a solution obtained by the mixing method after the amine compound is added to the organic solvent-dispersed silica sol. When the pH of the diluted solution at 20°C is lower than 4.5, the solid acidity of the colloidal silica particles may not be adequately suppressed and polymerization of the polymerizable organic compounds subsequently mixed thereto may occur. When the pH of the diluted solution at 20°C exceeds 11.0, the dispersibility of the colloidal silica particles may decrease to cause deterioration in dispersion stability of a composition of the polymerizable organic compound containing silica particles to be obtained.

The amine compound used in the present invention is preferably added as a solution in water or organic solvent. After the amine compound is added to the organic solvent-dispersed silica sol, the resultant solution is stirred for 1 to 300 minutes, preferably 10 to 60 minutes, so as to dissolve the amine compound adequately and uniformly in the organic solvent-dispersed silica sol.

In the process (a), the surface of a colloidal silica particle contained in the organic solvent-dispersed silica sol is preferably rendered organophilic by a reaction with the organosilane compound to form a covalent bond.

As an indicator of the dispersibility of colloidal silica particles in the organic solvent-dispersed silica sol, the particle size measured by the dynamic light scattering method can be used. When the colloidal silica particles contained in the organic solvent-dispersed silica sol aggregate to lead a decrease in dispersibility, the particle size of the organic solvent-dispersed silica sol measured by the dynamic light scattering method increases.

In the present invention, it is preferable to confirm, before proceeding to the next process, that there is no aggregation of colloidal silica particles resulting from the addition of the amine compound by measuring the particle size by the dynamic light scattering method. Proceeding to the next process with colloidal silica particles aggregated may cause an increase in viscosity of a composition of the polymerizable organic compound containing silica particles to make the handling difficult or may cause deterioration in storage stability.

Next, in the process (b), the amine-added organic solvent-dispersed silica sol obtained in the process (a) is mixed with the polymerizable organic compound. As for the mass ratio of a silica component of the amine-added organic solvent-dispersed silica sol relative to the polymerizable organic compound in the process (b), the silica component is 1 to 200 parts by mass relative to 100 parts by mass of the polymerizable organic compound.

This mixing may be performed by adding the polymerizable organic compound to the amine-added organic solvent-dispersed silica sol, or by adding the amine-added organic solvent-dispersed silica sol to the polymerizable organic compound. This mixing may be performed by adding one while stirring the other, or by adding one without stirring the other. While mixing, a part or all of the organic solvent contained in the amine-added organic solvent-dispersed silica sol may be distilled away. This mixing may be performed at room temperature or on heating. When heating is performed, the temperature may be any temperature as long as the polymerizable organic compounds do not undergo thermal polymerization or thermal decomposition and, when a part or all of the organic solvent contained in the amine-added organic solvent-dispersed silica sol is distilled away during the mixing, the temperature needs to be equal to or higher than the boiling point of the organic solvent.

After the amine-added organic solvent-dispersed silica sol and the polymerizable organic compound are mixed together, the resultant mixture is stirred or shaken until becoming adequately uniform. The stirring or the shaking is performed for equal to or longer than 1 minute, and preferably equal to or longer than 10 minutes.

The organic solvent can be at least partly removed from a composition of the polymerizable organic compound containing silica particles obtained in the process (b) while further stirring at normal pressure and on heating, or under reduced pressure and on heating or at room temperature. The condition for removing the organic solvent may be any condition as long as the organic solvent can be distilled away accompanied with no polymerization or decomposition of the polymerizable organic compounds, and the pressure and the fluid temperature inside a container for substitution may be adjusted as needed. The container to be used for the distillation of the organic solvent is preferably a distillation apparatus the pressure and the temperature inside of which can be adjusted as needed, such as a rotary evaporator.

As for a composition of the polymerizable organic compound containing silica particles obtained according to the present invention, the time course of the viscosity of the composition can be used as an indicator of the storage stability. The composition of the polymerizable organic compound containing silica particles obtained according to the present invention undergoes little change in viscosity and is excellent in storage stability.

The composition of the polymerizable organic compound containing silica particles obtained according to the present invention can be combined with other polymerizable organic compounds, curing agents, curing accelerators, polymerization initiators, and the like, as needed, to be formed into a curable resin composition in which colloidal silica particles are well dispersed. The curable resin composition can be subjected to coating or cast molding and be subsequently cured through active energy ray irradiation or heating to be made into a cured resin product. When the curable resin composition contains an organic solvent, it is preferable to remove the organic solvent as needed before curing.

The cured resin product can take various forms depending on the use, for example, thin films such as a hard coating film for a transparent plastic board, a plastic lens, a plastic bottle, a film, and the like, various sealants, molded articles, and the like.

Examples

Methods for measuring the physical properties of the silica sol will be described below.

[$SiO_2$ concentration]

It was calculated using a baked residue obtained by drying a silica sol at 130°C and then baking the gel obtained in a crucible at 800°C.

[Average primary particle size (particle size measured by nitrogen adsorption method)]

The specific surface area of powder obtained by drying a silica sol at 300°C was measured using a specific surface area measuring apparatus MONOSORB (registered trademark) MS-16 (manufactured by YUASA-IONICS COMPANY, LIMITED).
[Moisture content] It was determined by the Karl Fischer titration method.
[Organic solvent content] It was determined by gas chromatography.
Gas chromatography conditions:

Column: 3 mm × 1 m glass column,
Packing material: Porapak Q,
Column temperature: 130 to 230°C (the temperature was raised at 8°C/min),
Carrier: $N_2$ 40 mL/min,
Detector: FID, Injection amount: 1 μL,
Internal standard: methyl ethyl ketone or acetonitrile was used.

[Viscosity] The viscosity of a silica sol was measured using a B-type rotational viscometer (manufactured by TOKI SANGYO CO., LTD.).
[Particle size measured by dynamic light scattering method] It was measured, after diluting a silica sol with the dispersion solvent thereof, by a COULTER N5 (trade name: manufactured by Beckman Coulter, Inc. USA) using the parameters of the solvent.
The materials below were prepared.

Organic solvent sol (I) a commercially available methyl ethyl ketone-dispersed silica sol (colloidal silica particles that are rendered organophilic with organosilane compounds) was prepared (trade name: MEK-ST, with a particle size measured by the BET method of 12 nm, a $SiO_2$ concentration of 30% by mass, a methanol concentration of 0.9% by mass, a moisture content of 0.1% by mass, a particle size measured by the dynamic light scattering method of 16 nm, and a pH of 3.7 as measured in a solution obtained by dilution with the same mass of methanol and water, manufactured by Nissan Chemical Industries, Ltd.).
Organic solvent sol (II) a commercially available 2-propanol-dispersed silica sol (colloidal silica particles that are not rendered organophilic with organosilane compounds) was prepared (trade name: IPA-ST, with a particle size measured by the BET method of 12 nm, a $SiO_2$ concentration of 30% by mass, a methanol concentration of 2.1% by mass, a moisture content of 0.3% by mass, a particle size measured by the dynamic light scattering method of 20 nm, and a pH of 3.6 as measured in a solution obtained by dilution with the same mass of methanol and water, manufactured by Nissan Chemical Industries, Ltd.).
Organic solvent sol (III) a commercially available methyl ethyl ketone-dispersed silica sol (colloidal silica particles that are rendered organophilic with organosilane compounds) was prepared (trade name: MEK-ST-L, with a particle size measured by the BET method of 44 nm, a $SiO_2$ concentration of 30.5% by mass, a methanol concentration of 0.5% by mass, a moisture content of 0.1% by mass, a particle size measured by the dynamic light scattering method of 90 nm, and a pH of 3.6 as measured in a solution obtained by dilution with the same mass of methanol and water, manufactured by Nissan Chemical Industries, Ltd.).
Organic solvent sol (IV) an organic solvent sol (IV) was prepared by the method below. One thousand-grams (1000 g) of a commercially available methanol-dispersed silica sol (colloidal silica particles that are not rendered organophilic with organosilane compounds) (trade name: MT-ST, with a particle size measured by the BET method of 12 nm, a $SiO_2$ concentration of 30% by mass, a methanol concentration of 68% by mass, a moisture content of 2% by mass, and a pH of 3.6 as measured in a solution obtained by dilution with the same mass of methanol and water, manufactured by Nissan Chemical Industries, Ltd.) was placed in a 2 L-volume glass reactor equipped with a stirrer, 38.0 g of γ-methacryloxypropyltrimethoxysilane [trade name: KBM-503, manufactured by Shin-Etsu Chemical Co., Ltd.] was added thereto while stirring the sol, and the fluid temperature was maintained at 50°C for 4 hours to obtain

an organic solvent sol (IV) (with a $SiO_2$ concentration of 30.5% by mass, a moisture content of 2% by mass, and a pH of 3.6 as measured in a solution obtained by dilution with the same mass of methanol and water).
Liquid epoxy resin (I-b): a commercially available liquid epoxy resin was prepared [trade name: CELLOXIDE (registered trademark) 2021P, 3,4-epoxycyclohexylmethyl-3',4'-epoxycyclohexane carboxylate (substance name), manufactured by DAICEL CHEMICAL INDUSTRIES, LTD.].

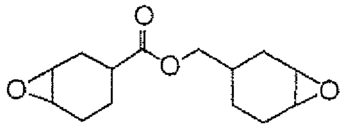

(I)

Liquid epoxy resin (II-b): a commercially available liquid epoxy resin was prepared [trade name: Epicoat (registered trademark) 828, bisphenol-A-diglycidyl ether (substance name), manufactured by Japan Epoxy Resin Co., Ltd.].
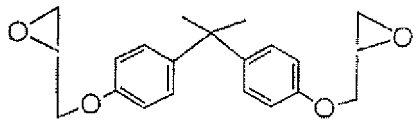

(I I)

**[0063]** - Acrylic monomer (I-c): a commercially available acrylic monomer was prepared (trade name: Viscoat #150, tetrahydrofurfuryl acrylate (substance name), manufactured by OSAKA ORGANIC CHEMICAL INDUSTRY LTD.).

Example 1

One hundred and fifty grams (150 g) of the organic solvent sol (I) was placed in a 200-mL beaker, and a solution of 0.060 g of cyclohexylamine in 3.0 g of methanol was added to the organic solvent sol (I) while stirring at room temperature, followed by stirring for 30 minutes to obtain an amine-added methyl ethyl ketone-dispersed silica sol (with a $SiO_2$ concentration of 29.4% by mass, a methanol concentration of 2.8% by mass, a moisture content of 0.1% by mass, a particle size measured by the dynamic light scattering method of 16 nm, and a pH of 7.7 as measured in a solution obtained by dilution with the same mass of methanol and water). Five grams (5.0 g) of the sol obtained was taken into a 20-mL glass bottle with a threaded opening and was mixed with 4.9 g of the liquid epoxy resin (I-b) followed by thoroughly shaking for 1 minute to obtain a colorless transparent composition (I-a) of a liquid epoxy resin containing silica particles. After being hermetically sealed and stored at 50°C for I month, the composition retained its original fluidity and no obvious thickening was observed. Subsequently, 100 g of the amine-added methyl ethyl ketone-dispersed silica sol was placed in a 500 mL-volume eggplant-shaped separable flask and was added with 96.7 g of a liquid epoxy resin (I), and then organic solvent was distilled away with a rotary evaporator while heating at a bath temperature of 60 to 100°C under reduced pressure of 200 to 50 Torr to obtain 126.5 g of a pale yellow transparent composition (I-a-1) of a liquid epoxy resin containing silica particles (with a $SiO_2$ concentration of 22.6% by mass, an epoxy resin concentration of 76.8% by mass, a methyl ethyl ketone concentration of 0.6% by mass, and B-type viscosity of 770 mPa·s at 30°C). Apart of the obtained composition (I-a-1) of a liquid epoxy resin containing silica particles was hermetically sealed in a glass container and kept in a thermostat bath at 23°C for 1 month, and then the B-type viscosity at 30°C was measured. The B-type viscosity was 1050 mPa·s and adequate fluidity for use was retained.

Examples 2 to 4

Compositions (II-a) to (IV-a) of a liquid epoxy resin containing silica particles were obtained in the same manner as in Example 1 except that the types and amounts of amine compounds listed in Table 1 were used. Even after being stored at 50°C for 1 month, the compositions obtained each retained its original fluidity. An organic solvent was distilled away in the same manner as in Example 1 to obtain compositions (II-a-1) to (IV-a-1) of a liquid epoxy resin containing

silica particles. Even when each of the compositions (II-a-1) to (IV-a-1) of a liquid epoxy resin containing silica particles was kept in a thermostat bath at 23°C for 1 month, a change in viscosity was small and adequate fluidity for use was retained.

Example 5

A composition (V-a) of a liquid epoxy resin containing silica particles was obtained in the same manner as in Example 1 except that the organic solvent sol (II) was used instead of the organic solvent sol (I) and 0.105 g of tri-n-butylamine was added instead of 0.060 g of cyclohexylamine. Even after being stored at 50°C for 1 month, the composition obtained retained its original fluidity. An organic solvent was distilled away in the same manner as in Example 1 to obtain a composition (V-a-1) of a liquid epoxy resin containing silica particles. When the obtained composition (V-a-1) of a liquid epoxy resin containing silica particles was kept in a thermostat bath at 23°C for 1 month, the viscosity increased about 6 times higher than that at right after production.

Example 6

A composition (VI-a) of a liquid epoxy resin containing silica particles was obtained in the same manner as in Example 1 except that 1.36 g of tri-n-butylamine was added instead of 0.060 g of cyclohexylamine. Even after being stored at 50°C for 1 month, the composition obtained retained its original fluidity. An organic solvent was distilled away in the same manner as in Example 1 to obtain a composition (VI-a-1) of a liquid epoxy resin containing silica particles. Even when the composition (VI-a-1) of a liquid epoxy resin containing silica particles was kept in a thermostat bath at 23°C for 1 month, a change in viscosity was small and adequate fluidity for use was retained.

Comparative Example 1

The same procedures as in Example 1 were performed except that no amine compound was added. On mixing the methyl ethyl ketone-dispersed silica sol and the epoxy resin together, the mixed solution generated heat to cause thickening and gelation due to polymerization.

Comparative Example 2

The same procedures as in Example I were performed except that 0.014 g of 3,8-diaza-bicyclo(5,4,0)undeca-7-ene was used instead of 0.060 g of cyclohexylamine to obtain an amine-added methyl ethyl ketone-dispersed silica sol (with a $SiO_2$ concentration of 29% by mass, a methanol concentration of 2.8% by mass, a moisture content of 0.1% by mass, a particle size measured by the dynamic light scattering method of 16 nm, and a pH of 4.2 as measured in a solution obtained by dilution with the same mass of methanol and water). Subsequently, 5.0 g of the sol was taken into a 20-mL glass bottle with a threaded opening and was mixed with 4.9 g of the liquid epoxy resin (I-b) followed by thoroughly shaking for 1 minute to obtain a colorless transparent composition (C-IV-a) of a liquid epoxy resin containing silica particles. When being hermetically sealed and stored at 50°C, the composition underwent gelation in 3 hours due to polymerization of the epoxy resin.

Comparative Example 3

The same procedures as in Example 5 were performed except that no tri-n-butylamine was added. On mixing the isopropanol-dispersed silica sol and the epoxy resin together, heat was generated to cause thickening and gelation due to polymerization.

Example 7

One hundred and fifty grams (150 g) of the organic solvent sol (III) was placed in a 200-mL beaker, and a solution of 0.086 g of tri-n-butylamine in 3.0 g of methyl ethyl ketone was added to the organic solvent sol (III) while stirring at room temperature, followed by stirring for 30 minutes to obtain an amine-added methyl ethyl ketone-dispersed silica sol (with a $SiO_2$ concentration of 30.1% by mass, a methanol concentration of 0.4% by mass, a moisture content of 0.1 % by mass, a particle size measured by the dynamic light scattering method of 90 nm, and a pH of 6.9 as measured in a solution obtained by dilution with the same mass of methanol and water). Subsequently, 100 g of the sol was placed in a 500 mL-volume eggplant-shaped separable flask and was added with 96.7 g of the liquid epoxy resin (II-b), and then an organic solvent was distilled away with a rotary evaporator while heating at a bath temperature of 60 to 100°C under reduced pressure of 200 to 50 Torr to obtain 126.5 g of a composition (VII-a-1) of a liquid epoxy resin containing

silica particles (with a $SiO_2$ concentration of 23.0% by mass, an epoxy resin concentration of 74.5% by mass, a methyl ethyl ketone concentration of 0.6% by mass, and B-type viscosity of 1110 mPa·s at 60°C). A part of the resin composition was hermetically sealed in a glass container and kept in a thermostat bath at 23°C for 1 month, and then the B-type viscosity at 60°C was measured. The B-type viscosity was 1130 mPa·s, which means the composition was stable.

Comparative Example 4

The same procedures as in Example 7 were performed, except that no tri-n-butylamine was added, to obtain 129.0 g of a highly-viscous composition (C-VII-a-1) of a liquid epoxy resin containing silica particles (with a $SiO_2$ concentration of 22.5% by mass, an epoxy resin concentration of 76.4% by mass, a methyl ethyl ketone concentration of 3.0% by mass, and B-type viscosity of 15000 mPa·s at 60°C). When a part of the resin composition was hermetically sealed in a glass container and kept in a thermostat bath at 23°C for 1 day, it hardened to show no fluidity. Even at 60°C, it remained hardened and the viscosity measurement was impossible.

Example 8

Eight hundred grams (800 g) of the organic solvent sol (IV) was placed in a 1 L-volume glass reactor equipped with a stirrer, and a solution of 0.156 g of 1,8-diaza-bicyclo(5,4,0)undeca-7-ene [a reagent from ACROS] in 11.2 g of methanol was added thereto while stirring the sol, followed by continuing stirring for 30 minutes to obtain an amine-added methanol-dispersed silica sol containing organophilic colloidal silica (with a $SiO_2$ concentration of 28.8% by mass, a moisture content of 2% by mass, and a pH of 5.2 as measured in a solution obtained by diluting the sol with the same mass of water and methanol). Subsequently, the sol was placed in a 2 L-volume eggplant-shaped flask and was added with 560 g of the acrylic monomer (I-c), and then methanol and water were distilled away with a rotary evaporator while heating at a bath temperature of 40 to 50°C under reduced pressure of 200 to 20 Torr to obtain 833 g of a colorless transparent composition (VIII-a-1) of an acrylic monomer containing silica particles (with a $SiO_2$ concentration of 30% by mass, a tetrahydrofurfuryl acrylate concentration of 69.7% by mass, B-type viscosity of 9.1 mPa·s at 30°C, a moisture content af 0.1% by mass, and a methanol concentration of 0.2% by mass). A part of the acrylic monomer composition was hermetically sealed in a glass container and kept in a thermostat bath at 23°C for month, and then the B-type viscosity at 30°C was measured. The B-type viscosity was 9.1 mPa·s, which means the composition was stable. The appearance remained colorless and transparent.

Comparative Example 5

The same procedures as in Example 8 were performed except that no 1,8-diaza-bicyclo(5,4,0)undeca-7-ene was added. While distilling methanol away with an evaporator after the addition of the acrylic monomer (I-c), the viscosity of the sol rapidly increased to cause polymerization of the acrylic monomer (I-c) and therefore a stable composition of an acrylic monomer containing silica particles was not obtained.

As for Examples 1 to 8 and Comparative Examples 1 to 5, a list of the compositions were shown in Table 1 and the results of storage stability tests for the compositions obtained were shown in Tables 2 and 3.

Table 1

| | Organic solvent-dispersed silica sol | Amine | Amine (g) / silica (g) | Amine-added organic solvent-dispersed silica sol | | |
|---|---|---|---|---|---|---|
| | | | | SiO2 (% by mass) | pH | Particle size (*2) (nm) |
| Ex.1 | Organic solvent sol (I) | Cyclohexylamine | 0.060/45.0 | 29.4 | 7.7 | 16 |
| Ex.2 | Organic solvent sol (I) | Di-n-butylamine | 0.077/45.0 | 29.4 | 7.7 | 16 |
| Ex.3 | Organic solvent sol (I) | Tri-n-butylamine | 0.111/45,0 | 29.4 | 7.8 | 16 |

(continued)

| | Organic solvent-dispersed silica sol | Amine | Amine (g) / silica (g) | Amine-added organic solvent-dispersed silica sol | | |
|---|---|---|---|---|---|---|
| | | | | SiO2 (% by mass) | pH | Particle size (*2) (nm) |
| Ex.4 | Organic solvent sol (I) | DBU(*1) | 0.089/45.0 | 29.4 | 7.6 | 18 |
| Ex. 5 | Organic solvent sol (II) | Tri-n-butylamine | 0.105/45.0 | 29.4 | 5.6 | 27 |
| Ex.6 | Organic solvent sol (I) | DBU(*1) | 0.382/45.0 | 29.4 | 10.0 | 16 |
| Ex. 7 | Organic solvent sol (III) | Tri-n-butylamine | 0.086/45.8 | 29.9 | 6.9 | 90 |
| Ex.8 | Organic solvent sol (IV) | DBU (*1) | 0.156/240 | 30 | 5.2 | 16 |
| Comp. Ex.1 | Organic solvent sol (I) | - | - | 30.0 | 3.7 | 16 |
| Comp. Ex. 2 | Organic solvent sol (I) | DBU (*1) | 0.014/45.0 | 29.4 | 4.2 | 16 |
| Comp. Ex. 3 | Organic solvent sol (II) | - | - | 30.0 | 3.6 | 20 |
| Comp. Ex. 4 | Organic solvent sol (III) | - | - | 30.5 | 3.6 | 90 |
| Comp. Ex. 5 | Organic solvent sol (IV) | - | - | 30 | 3.6 | 16 |
| (*1); DBU: 1,8-diaza-bicyclo(5,4,0)undeca-7-ene<br>(*2) a particle size measured by dynamic light scattering method | | | | | | |

Table 2

| | Composition of a polymerizable organic compound containing silica particles | Polymerizable organic compound (g) / $SiO_2$ (g) | Storage stability at 50°C |
|---|---|---|---|
| Ex. 1 | Composition (I-a) of a liquid epoxy resin containing silica particles | 100/30 | 1 Month or longer |
| Ex. 2 | Composition (II-a) of a liquid epoxy resin containing silica particles | 100/30 | 1 Month or longer |
| Ex. 3 | Composition (III-a) of Liquid epoxy resin containing silica particles | 100/30 | 1 Month or longer |

(continued)

| | Composition of a polymerizable organic compound containing silica particles | Polymerizable organic compound (g) / $SiO_2$ (g) | Storage stability at 50°C |
|---|---|---|---|
| Ex. 4 | Composition (IV-a) of a liquid epoxy resin containing silica particles | 100/30 | 1 Month or longer |
| Ex. 5 | Composition (V-a) of a liquid epoxy resin containing silica particles | 100/30 | 1 Month or longer |
| Ex. 6 | Composition (VI-a) of a liquid epoxy resin containing silica particles | 100/30 | 1 Month or longer |
| Comp. Ex. 1 | | 100/30 | Gelled within 30 minutes |
| Comp. Ex. 2 | Composition (C-IV-a) of a liquid epoxy resin containing silica particles | 100/30 | Gelled within 3 hours |
| Comp. Ex. 3 | | 100/30 | Gelled within 30 minutes |

Table 3

| | Composition of a polymerizable organic compound containing silica particles | Polymerizable organic compound (% by mass) | $SiO_2$ (% by mass) | Organic solvent (% by mass) | B-type viscosity (mPa·s) | |
|---|---|---|---|---|---|---|
| | | | | | Right after production | After 1 month at 23°C |
| Ex. 1 | Composition (I-a-1) of a liquid epoxy resin containing silica particles | 76.8 | 22.6 | 0.6 | 770 (*3) | 1050 (*3) |
| Ex. 2 | Composition (II-a-1) of a liquid epoxy resin containing silica particles | 76.9 | 22.5 | 0.6 | 590 (*3) | 890 (*3) |
| Ex. 3 | Composition (III-a-1) of a liquid epoxy resin containing silica particles | 76.8 | 22.5 | 0.7 | 540 (*3) | 760 (*3) |
| Ex. 4 | Composition (IV-a-1) of a liquid epoxy resin containing silica particles | 76.8 | 22.5 | 0.7 | 620 (*3) | 1080 (*3) |

(continued)

| | Composition of a polymerizable organic compound containing silica particles | Polymerizable organic compound (% by mass) | $SiO_2$ (% by mass) | Organic solvent (% by mass) | B-type viscosity (mPa·s) | |
|---|---|---|---|---|---|---|
| | | | | | Right after production | After 1 month at 23°C |
| Ex. 5 | Composition (V-a-1) of a liquid epoxy resin containing silica particles | 77.2 | 22.5 | 0.3 | 840 (*3) | 5030 (*3) |
| Ex. 6 | Composition (VI-a-1) of a liquid epoxy resin containing silica particles | 77.2 | 22.5 | 0.3 | 600 (*3) | 630 (*3) |
| Ex. 7 | Composition (VII-a-1) of a liquid epoxy resin containing silica particles | 76.4 | 23.0 | 0.6 | 1120 (*4) | 1130 (*4) |
| Ex. 8 | Composition (VIII-a-1) of a liquid acrylic monomer containing silica particles | 69.7 | 30.0 | 0.3 | 9 (*3) | 9 (*3) |
| Comp. Ex. 4 | Composition (C-VII-a-1) of a liquid epoxy resin containing silica particles | 74.5 | 22.5 | 3.0 | 15000 (*4) | Gelled after |
| Comp. Ex. 5 | | Gelled during organic solvent distillation | | | | |
| *3: a measured value at 30°C, *4: a measured value at 60°C | | | | | | |

INDUSTRIAL APPLICABILITY

A composition of a polymerizable organic compound containing silica particles obtained according to the present invention is suitable for use as a hard coating film and a thin film to be formed on the surface of synthetic resin moldings such as a plastic lens, a plastic bottle, a film, and a transparent plastic board and for use in, for example, various sealing materials for LET3s, semiconductors.

## Claims

1. A process for producing a composition of a polymerizable organic compound containing silica particles **characterized by** comprising:

(a) a process of preparing an amine-added organic solvent-dispersed silica sol, in which an amine compound is added to an organic solvent-dispersed silica sol that contains colloidal silica particles having an average primary particle size of 5 to 100 nm and that has a pH of 2.5 to 4.0 at 20°C as measured in a diluted solution obtained by a method in which the same mass of the organic solvent-dispersed silica sol, methanol, and pure water are mixed together, so that the diluted solution obtained by the mixing method has a pH of 4.5 to 11.0 at 20°C; and

(b) a process of mixing the amine-added organic solvent-dispersed silica sol obtained in the process (a) with a polymerizable organic compound.

**2.** The process for producing a composition of a polymerizable organic compound containing silica particles according to claim 1, wherein, in the process (a), the pH at 20°C as measured in the diluted solution of the amine-added organic solvent-dispersed silica sol obtained by the mixing method is 5.0 to 8.5.

**3.** The process for producing a composition of a polymerizable organic compound containing silica particles according to claim 1 or 2, **characterized in that** the colloidal silica particles in the process (a) are rendered organophilic with organosilane compounds.

**4.** The process for producing a composition of a polymerizable organic compound containing silica particles according to any one of claims 1 to 3, wherein the polymerizable organic compound is a cationically polymerizable resin.

**5.** The process for producing a composition of a polymerizable organic compound containing silica particles according to any one of claims 1 to 3, wherein the polymerizable organic compound is a liquid epoxy resin.

**6.** The process for producing a composition of a polymerizable organic compound containing silica particles according to any one of claims 1 to 3, wherein the polymerizable organic compound is an epoxy resin containing one or more epoxycyclohexyl groups in a molecule thereof.

**7.** The process for producing a composition of a polymerizable organic compound containing silica particles according to any one of claims 1 to 3, wherein the polymerizable organic compound is an acrylic monomer and/or an acrylic oligomer.

**8.** The process for producing a composition of a polymerizable organic compound containing silica particles according to any one of claims 1 to 7, **characterized by** further comprising, after the process (b), removing a part or all of an organic solvent contained in a composition of the polymerizable organic compound containing silica particles.

**INTERNATIONAL SEARCH REPORT**

International application No.
PCT/JP2009/069442

A. CLASSIFICATION OF SUBJECT MATTER
*C08L63/00*(2006.01)i, *C08F2/44*(2006.01)i, *C08F292/00*(2006.01)i, *C08K9/04*(2006.01)i

According to International Patent Classification (IPC) or to both national classification and IPC

B. FIELDS SEARCHED

Minimum documentation searched (classification system followed by classification symbols)
C08L63/00-63/10, C08F2/44, C08F292/00, C08K9/04

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2006-225632 A (Mitsubishi Rayon Co., Ltd.), 31 August 2006 (31.08.2006), claims; paragraphs [0077], [0048], [0082]; examples & US 2008/0281014 A1 & WO 2006/028200 A1 & KR 10-2007-0050408 A & CN 101001912 A | 1-10 |
| A | JP 2006-507395 A (General Electric Co.), 02 March 2006 (02.03.2006), claims; paragraphs [0014] to [0020]; examples & JP 2008-545019 A & US 2004/0101688 A1 & EP 1565520 A & EP 1864323 A & WO 2004/048457 A1 & WO 2006/107660 A1 & KR 10-2005-0083966 A | 1-10 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 17 December, 2009 (17.12.09) | 12 January, 2010 (12.01.10) |

| Name and mailing address of the ISA/ | Authorized officer |
|---|---|
| Japanese Patent Office | |
| Facsimile No. | Telephone No. |

Form PCT/ISA/210 (second sheet) (April 2007)

INTERNATIONAL SEARCH REPORT

International application No. PCT/JP2009/069442

C (Continuation). DOCUMENTS CONSIDERED TO BE RELEVANT

| Category* | Citation of document, with indication, where appropriate, of the relevant passages | Relevant to claim No. |
|---|---|---|
| A | JP 2007-515524 A (General Electric Co.), 14 June 2007 (14.06.2007), claims; paragraphs [0016] to [0020], [0024] to [0026], [0028], [0037], [0038], [0070]; examples & JP 2008-537968 A & US 2005/0131106 A1 & EP 1697985 A & WO 2005/062369 A1 & DE 602004005753 D & KR 10-2006-0128890 A & CN 1918703 A | 1-10 |
| A | JP 2008-537968 A (Momentibu Pafomansu Materiaruzu Inku), 02 October 2008 (02.10.2008), claims; paragraphs [0016], [0027], [0028], [0039], [0040]; examples & JP 2008-545019 A & US 2005/0049334 A1 & EP 1863874 A & DE 602004005753 D & CA 2537827 A & KR 10-2006-0097011 A & BRA PI0413780 & KR 10-2006-0093707 A & BRA PI0413778 | 1-10 |
| A | JP 2003-281934 A (Mitsubishi Rayon Co., Ltd.), 03 October 2003 (03.10.2003), claims; paragraphs [0035], [0036], [0063], [0064]; examples (Family: none) | 1-10 |
| A | JP 2002-038377 A (Dow Corning Toray Silicone Co., Ltd.), 06 February 2002 (06.02.2002), claims; paragraph [0014]; examples & US 2002/0035186 A1 & EP 1178150 A1 & CA 2354764 A & KR 10-2002-0011116 A & CN 1338540 A | 1-10 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005225964 A
- JP A2006507210 W
- JP 2008156625 A
- JP 2008163258 A
- WO 06035709 A